# EUROPEAN PATENT SPECIFICATION

(11) **EP 2 773 818 B1**
(45) Date of publication and mention of the grant of the patent: **28.12.2016**
(21) Application number: 12719476.9
(22) Date of filing: 10.02.2012
(51) Int. Cl.: E03D 11/14

(54) **METHOD OF MOUNTING A TOILET BOWL ON A WALL AND MOUNTING KIT USED THEREFORE**
VERFAHREN ZUR MONTAGE EINER TOILETTENSCHÜSSEL AN EINER WAND UND MONTAGESET HIERFÜR
PROCÉDÉ DE MONTAGE D'UNE CUVETTE DE TOILETTES SUR UNE PAROI ET ENSEMBLE DE MONTAGE UTILISÉ POUR CELUI-CI

(30) Priority: 25.10.2011 TR 201110592
(43) Date of publication of application: 10.09.2014
(73) Proprietor: ECZACIBASI YAPI GERECLERI SANAYI VE TICARET ANONIM SIRKETI, 34394 Istanbul (TR)
(72) Inventor: SARIGÖL, Süleyman Vedat, 11300 Bozüyük - Bilecik (TR); TÜRKÖZ, Hatice, 11300 Bozüyük - Bilecik (TR); BALTACI, Nihat, 11300 Bozüyük - Bilecik (TR); ÇAKICI, Ali Kamer, 11300 Bozüyük - Bilecik (TR); YÜCEL, Turgut, 11300 Bozüyük - Bilecik (TR); IBIS, Mustafa, 11300 Bozüyük - Bilecik (TR); ÇIÇEK, Seyhan, 11300 Bozüyük - Bilecik (TR); HOCAOGLU, Recep, 11300 Bozüyük - Bilecik (TR); ÜRÜN, Osman, 11300 Bozüyük - Bilecik (TR)
(74) Representative: Ligi, Stefano
(86) International application number: PCT/TR2012/000031
(87) International publication number: WO 2013/062493

(56) References cited:
- EP-A1- 1 338 711
- DE-U1- 9 103 333
- NL-A- 9 401 071

## Description

### Subject of the Invention

The subject of the present invention is related to a kit that provides the easy mounting of a sanitaryware product on a wall and to a method related to the realization of the mounting of the sanitaryware products by using this kit.

### Present State of the Art

In the majority of available sanitaryware products, mounting on the wall surface is made through the hollow surfaces positioned at the sides of the product. This leads to the formation of a non-aesthetic appearance of the sanitaryware products. Whereas with the so-called hidden-mounting methods in which instead of using the assembly holes at the sides of the product, mounting on the wall is realized from the bottom of the product without drilling any holes, certain time- consuming and labor-increasing problems such as the difficulty of the assembly process due to the short distance between the lower piece of the product and the floor and the difficulty to see the location of mounting, are confronted.

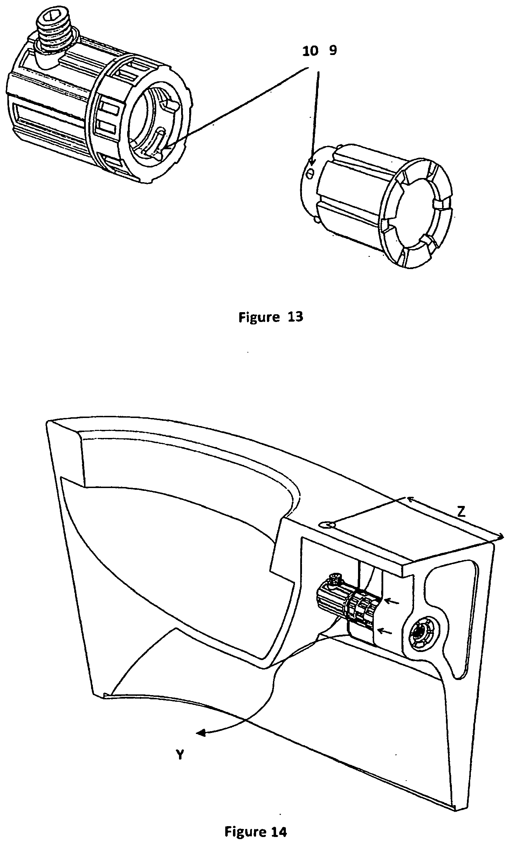

By using the systems developed in the present state of art, it is possible to mount the sanitaryware products, pieceicularly the toilet closets from the holes present at their upper surfaces. The utility model, Reg. no. 2009 04485 pertains to a mounting apparatus developed to mount the wall hung WC pan on the wall surface and it is not possible to realize the mounting of all types of sanitaryware product by using the mentioned system. Fig. 14 shows the modifications that need to be made on the product in order to make it possible to realize the mounting by using the mentioned system. The mounting of the products with a long z distance (mounting distance between the holes existing at the top surface of the product and on the wall surface) as shown in the figure, cannot be realized by the subject system and in these products, i.e. those with a long mounting distance (z distance) the surface of the product will have to be extended up to a point referred to as the "Y" distance, as shown in Fig. 14 with arrows. This will require a modification on the products.

In the patent no. EP 1338711, a mounting system is mentioned. This system is similar to that described in the utility model no. 2009 04485 wherein the main difference between these two systems is that while a fastening piece is used on the piece defined as the body in the utility model no. 2009 04485, this body forms a monolithic structure together with the dowel in the patent no. EP 1338711. Again, it is not possible to realize the mounting of the sanitaryware products by using the system mentioned in the patent no. EP 1338711. Only those products with an appropriate z distance can be installed by using this system. The mounting systems mentioned in aforementioned applications can be used only if certain modifications are made on the products to be installed or the products have to be designed in accordance with these mentioned systems.

In the patent no. EP2199473 the system mentioned in EP 1338711 is used and the same disadvantages are valid for this mounting system too. In all systems mentioned above, in cases when the distance between the hole on the upper surface of the sanitaryware product and the wall is long, the mounting process cannot be realized. As shown in Fig. 14, the distance "Y" has to be designed so that it allows the use of these systems.

### A Brief Explanation of the Invention

The subject of the present invention is related to a system that provides the easy mounting of the sanitaryware products on the wall and to a method related to the realization of the mounting of the sanitaryware products by using this system.

In the system of the present invention, the sanitaryware product is fixed to the wall by tightening the screw on the clamping piece using an allen key that is attached through the mounting holes. In the system of the present invention, differently from the systems used in the present state of art, extension pieces are used and in cases when the distance of the mounting hole (z distance) on the upper surface of the sanitaryware product is different, by attaching extension pieces to the clamping piece, the mounting of the sanitaryware products of different sizes can be realized without making any modifications on the product.

### Explanation of the Figures

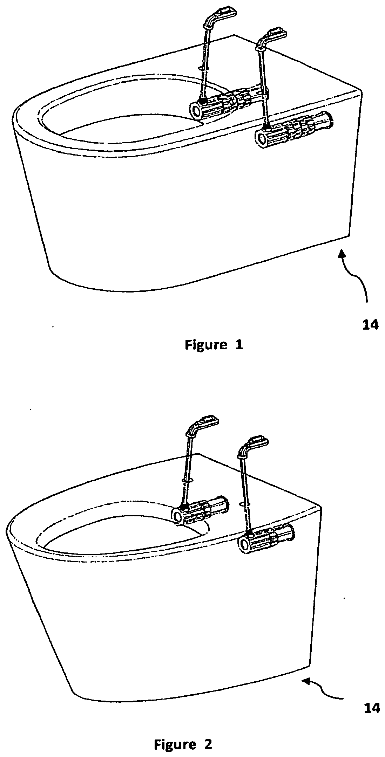

**Figure 1** shows the mounting of a product using the system developed within the scope of the present invention, wherein the distance between the mounting hole on the product and the wall surface (the z distance) is long.
**Figure 2** shows the mounting of a product using the system developed within the scope of the invention, wherein the distance between the mounting hole on the product and the wall surface (the z distance) is short.
**Figure 3** shows the pieces of the mounting system.
**Figure 4** shows the attachment of the extension pieces to the clamping piece.
**Figure 5** shows the mounting of a sanitaryware product.
**Figure 6** shows the mounting of a sanitaryware product.
**Figure 7** is the perspective view of the mounting of a sanitaryware product using the system according to the present invention
**Figure 8** shows the completion of the mounting of a sanitaryware product using the system according to the present invention
**Figure 9** is the perspective view showing the realization of the mounting process of the sanitaryware product from below, by using the system according to the present invention
**Figure 10** is the detailed view showing the realization of the mounting process of the sanitaryware product from below, by using the system according to the present invention
**Figure 11** is the perspective view showing the realization of the mounting process of the sanitaryware product from the side, by using the system according to the present invention
**Figure 12** is the detailed view showing the realization of the mounting process of the sanitaryware product from the side, by using the system according to the present invention
**Figure 13** is the locking system on the mounting system according to the present invention
**Figure 14** shows the mounting distance between the mounting hole on the sanitaryware product and the wall surface

### Description of the References:

**Z:** The mounting distance between the mounting hole on the sanitaryware product and the wall surface
**Y:** The distance that the product surface needs to be extended in case of using the state of art mounting systems
   **1:** Clamping Piece
   **2:** Extension Piece
   **3:** Rear Connecting Piece
   **4:** Stud Bolt
   **5:** Allen Key
   **6:** Key Piece (6a: lower key piece, 6b: upper key piece)
   **7:** Allen Screw
   **8:** Washer
   **9:** Protruding sections of the pieces
   **10:** Slots on the pieces
   **11:** Mounting holes on the sanitaryware product
   **12:** Conical cavity on the stud bolt/piece
   **13:** Mounting hole at the back of the sanitaryware product
   **14:** Sanitaryware product

### Description of the Invention

The subject of the present invention is related to a system that provides the easy mounting of the sanitaryware products on the wall and to a method related to the realization of the mounting of the sanitaryware products by using this system.

The system of the invention consists of a clamping piece (1), extension pieces (2), rear connecting piece (3), stud bolt (4) allen key (5), key piece (6), allen screw (7) and washer (8) pieces. Although modification of the product is required when mounting systems of the present state of art are used, in case of using the system of the present invention, the mounting process can be realized without making any changes on the product.

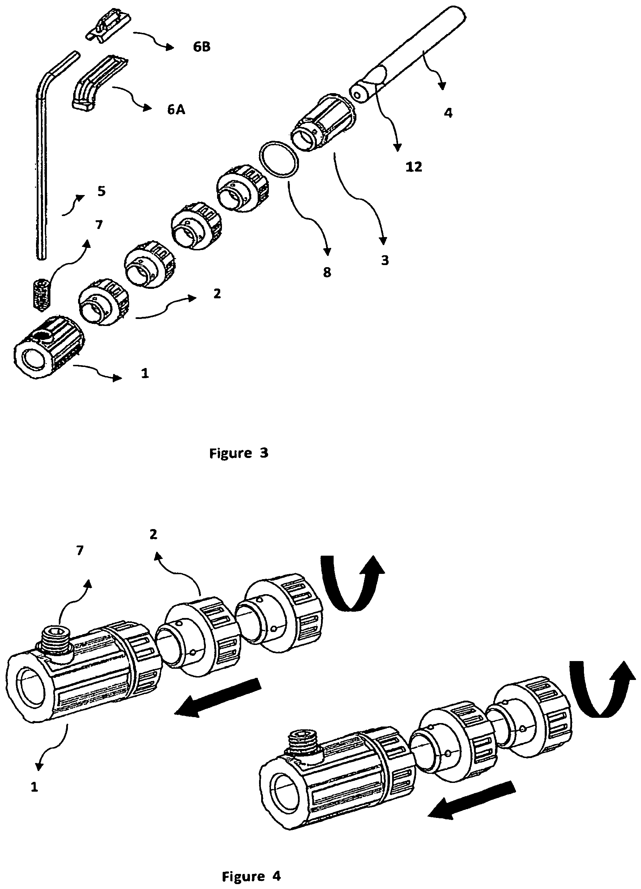

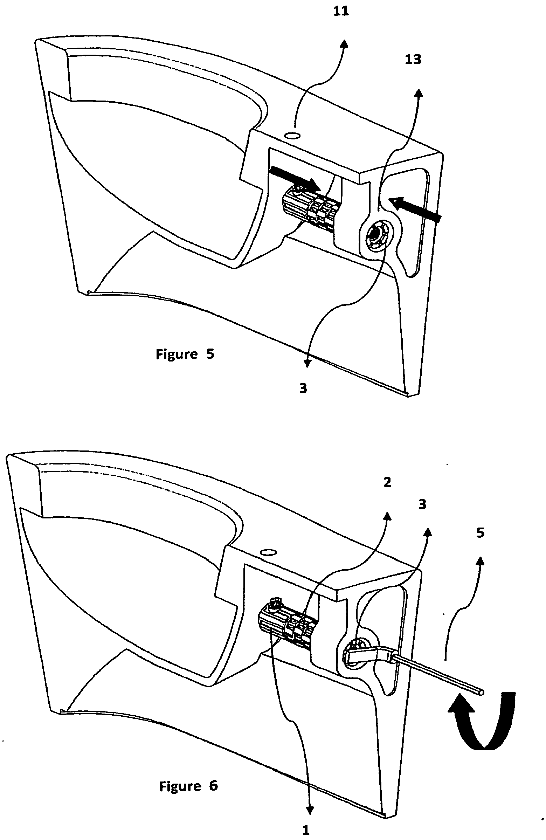

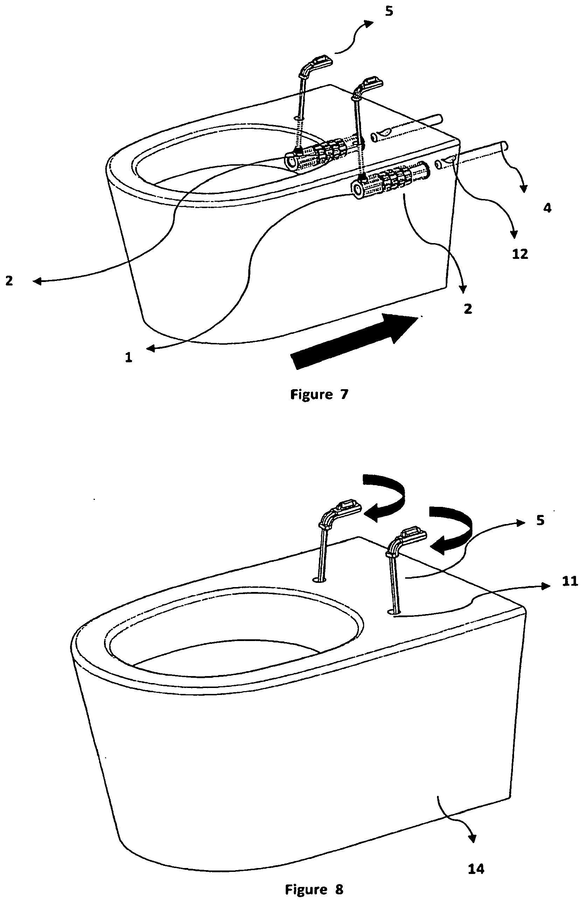

For the implementation of the mounting system developed within the scope of the invention, first the key pieces (6a, 6b) are combined on the alien key (5). These pieces allow the allen key with its surface area expanded, to be handled more easily and to realize the tightening operation in an easier way. A number of extension pieces (2) according to the distance between the holes (11) on the upper surface of the sanitaryware product to be installed on the wall and mounting point on the wall (z distance) are attached to the clamping piece (1) (Fig. 4) and the clamping (1) and extension (2) pieces are aligned to the sanitaryware product through the inner side of the hole (13) for realizing the mounting (Fig. 5). The rear connecting piece (3) is aligned to the wall from the back surface of the mounting hole (13) and with the help of the key piece (6) on the allen key (5) it (3) is turned 90° clockwise in order to be fixed to the extension pieces (2). (Fig. 6). By means of the hole (11) on the upper surface of the sanitaryware product (14) one can control whether the allen key (5) aligns the allen screw (7) or not and provide the alignment. The stud bolt/piece (4) is fixed to the stud protruding from the wall in such a manner that the conical cavity (12) on it (4) will be positioned at the top (Fig. 7). The sanitaryware product (14) is installed on the stud bolt (4) through the mounting holes (13) on its back surface. The allen key (5) tightens the allen screw (7) through the holes (11) on the sanitaryware product and so the product is fixed to the wall surface (Fig. 8). In this manner the mounting process of the product is completed. The use of the system according to the present invention allows the mounting of all products, even if the mounting holes (11) on the product have mounting distances ("z" distances) of different lengths. By adding a number of extension pieces (2) according to the "z" distance of the product to the mounting system, the mounting of various sanitaryware products can be realized without making any modifications on the product. In this case, the requirement for a modification of design or any amendments in the product according to the present state of art is eliminated. Since the said extension pieces also serve as guides, the mounting process onto the stud bolt protruding from the wall surface is realized easily.

In the system of the present invention, in case of the stripping of teeth during the screwing process of the pieces, there is also a locking system. With this locking system, the protrusion sections (9) of the attached rear connecting piece (3) and the extension pieces (2) engage into the slots (10) present on the piece that they have been attached to, and thus the locking process is completed. In this case, the locking operation is realized both in the extension pieces attached to each other and in the rear connecting piece attached to the said extension pieces (2).

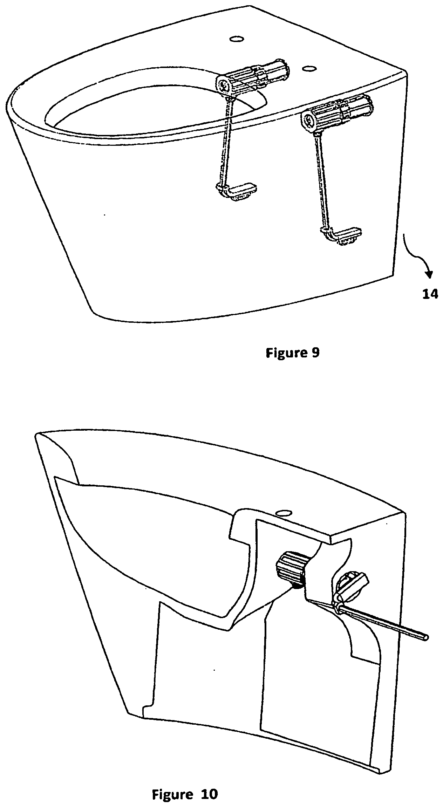

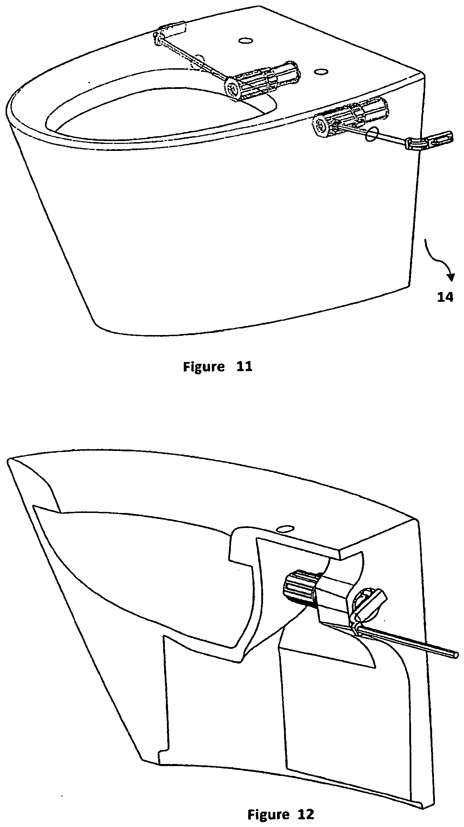

In the system of the present invention, the mounting of different products can be realized by the use of a desired quantity of extension pieces, without making any modifications on the product. The system according to the invention can be used not only for the mounting of the products with mounting holes present at their upper section but also for the mounting of the products with mounting holes at different points of the products. Also the mounting of the products with mounting holes at their lower and side sections can be realized by using the system according to the invention. Mounting from the bottom and from the side performed by using the system of the invention is shown in Figures 9, 10, 11 and 12. Thus, the presence of the mounting holes at the mounting area of the sanitaryware products and positions of the allen screw and the allen key facing the side and down, are sufficient for the realization of the mounting.

Although the application comprises the drawings related to the mounting of the closets, the system can be used for the mounting of all types of sanitaryware products as long as there are mounting holes on the surface where the mounting will be realized. By using the mounting system developed within the scope of the invention, the mounting of many sanitaryware products such as WC pans, wash basins, bidets, and urinals on the wall surface can be realized. Sanitaryware products mentioned in this patent are ceramic however the mentioned sanitaryware products can also be made of a polymer-based material or made of any other suitable material within the scope of the present invention.

## Claims

1. A kit comprising a sanitary ware product and a mounting system for mounting the sanitary ware product to a wall with its mounting holes (11, 13) being spaced from the supporting wall and providing access to the mounting system, as well as an allen key (5) as respective tool with a key piece (6) attached to the allen key (5) and which is used to fix a rear connecting piece (3) of the mounting system and a stud protruding from the wall to mount the mounting system; the kit further comprising:
• a clamping piece (1) which is provided with an allen screw (7) that in turn interacts with a conical cavity (12) on a stud bolt (4),
• the rear connecting piece (3),
• the stud bolt (4) being provided with the conical cavity (12) on it and which is fixed to the stud protruding from the wall in such a manner that the conical cavity (12) on it (4) will be positioned at the top,
• the allen screw (7) which will be fixed in and extends through a hole on the clamping piece (1) as well as into the conical cavity (12) on the stud bolt (4) which is aligned and which will be operated through the hole (11) of the sanitary ware product,
• a washer (8) which is mounted between the clamping piece (1) and the rear connecting piece (3)
**characterized in that** the mounting system further comprises;
• a plurality of extension pieces (2) which are mounted between the clamping piece (1) and the rear connecting piece (3) such that the rear connecting piece (3) is mounted to the extension pieces (2) by turning it with the key piece on the allen key (5) by 90° clockwise and **in that** the extension pieces (2) are in a sufficient number depending on the distance (z) between the hole (11) on the surface of the sanitary ware product providing access to the mounting system and a mounting point on the wall such that a desired number of extension pieces (2) are positioned between the clamping piece (1) and rear connecting piece (3) in order to enable the usage of the mounting system with different mounting distances (z) in different lengths.

2. The kit for mounting the sanitary ware product according to Claim 1, **characterized in that** the mounting system comprises a locking system which comprises protrusion sections (9) and corresponding slots (10) to these protrusions on the attached extension pieces (2) and the rear connecting piece (3).

3. A method of mounting a sanitary ware product to a wall using the mounting system according to Claim 1, **characterized in that** the mounting is realized by;
• combining the key pieces (6a, 6b) on the allen key (5);
• attaching a number of extension pieces (2) according to the distance (z) between the holes on the upper surface of the sanitary ware product and the wall to the clamping piece (1);
• aligning the clamping piece (1) and extension pieces (2) to the sanitary ware product, through the inner side of the hole on the sanitary ware product to be mounted to the wall;
• aligning the rear connecting piece (3) to the wall from the back surface of the mounting hole (13) and turning it by 90° clockwise with the help of the key piece (6) on the allen key (5) in order to fix it (3) to the extension pieces (2),
• providing the alignment by controlling whether the allen key (5) aligns the allen screw (7) or not, through the hole on the upper surface of the sanitary ware product (14);
• fixing the stud bolt (4) to a stud protruding from the wall in such a manner that the conical cavity (12) on it will be positioned at the top;
• mounting the sanitary ware product on the stud bolt (4) through the mounting holes (13) on its rear surface; and
• fixing the sanitary ware product to the wall surface by tightening the allen screw (7) by means of the allen key (5) to make it extend through the hole (11) on the sanitary ware product and through the hole on clamping piece (1) as well as into the conical cavity (12) on the stud bolt (4) all of which are aligned and thus realizing the mounting process.

4. A method according to Claim 3, **characterized in that** the holes (11) are on the upper surface of the sanitary ware product.

5. A method according to Claim 3, **characterized in that** the holes (11) are on the bottom surface of the sanitary ware product.

6. A method according to Claim 3, **characterized in that** the holes are on the side surface of the sanitary ware product.

7. A method according to claim 3, 4, 5 and 6 wherein the sanitary ware product is made of ceramic.

8. A method according to claim 3, 4, 5 and 6 wherein the sanitary ware product is made of a polymer-based material.

## Patentansprüche

1. Ein Bausatz aufweisend ein Sanitärausstattungsprodukt und ein Montagesystem zum Montieren des Sanitärausstattungsprodukts an einer Wand, wobei dessen Montagelöcher (11, 13) von der stützenden Wand im Abstand angeordnet sind und einen Zugang zum Montagesystem bereitstellen, sowie einen Innensechskantschlüssel (5) als ein jeweiliges Werkzeug, wobei ein Schlüsselstück (6) an dem Innensechskantschlüssel (5) angebracht ist, und welcher verwendet wird, um ein hinteres Verbindungsstück (3) des Montagesystems und einen Stift, welcher von der Wand aus vorsteht, zu befestigen, um das Montagesystem zu montieren, wobei der Bausatz ferner aufweist:
• ein Klemmstück (1), welches mit einer Innensechskantschraube (7) bereitgestellt ist, welche wiederum mit einer konischen Aussparung (12) an einem Stehbolzen (4) zusammenwirkt,
• das hintere Verbindungsstück (3),
• den Stehbolzen (4), welcher mit der konischen Aussparung (12) daran bereitgestellt ist und welcher an dem Stift, der von der Wand aus vorsteht, auf solch eine Weise befestigt ist, dass die konische Aussparung (12) daran (4) an der Oberseite angeordnet wird,
• die Innensechskantschraube (7), welche befestigt wird in und sich erstreckt durch ein Loch an dem Klemmstück (1) sowie in die konischen Aussparung (12) an dem Stehbolzen (4), welcher ausgerichtet ist, hinein und welche durch das Loch (11) des Sanitärausstattungsprodukts hindurch betätigt wird,
• eine Beilagscheibe (8), welche zwischen dem Klemmstück (1) und dem hinteren Verbindungsstück (3) angebracht ist,
**gekennzeichnet dadurch, dass** das Montagesystem ferner aufweist:
• eine Mehrzahl von Erweiterungsstücken (2), welche zwischen dem Klemmstück (1) und dem hinteren Verbindungsstück (3) montiert sind, so dass das hintere Verbindungsstück (3) an den Erweiterungsstücken (2) angebracht ist, indem es mit dem Schlüsselstück an dem Innensechskantschlüssel (5) um 90° im Uhrzeigersinn gedreht wird, und dadurch, dass die Erweiterungsstücke (2) in einer ausreichenden Anzahl abhängig von dem Abstand (z) zwischen dem Loch (11) an der Fläche des Sanitärausstattungsprodukts, welches den Zugang zum Montagesystem bereitstellt, und einem Montagepunkt an der Wand vorliegen, so dass eine gewünschte Anzahl von Erweiterungsstücken (2) zwischen dem Klemmstück (1) und dem hinteren Verbindungsstück (3) angeordnet ist, um die Verwendung des Montagesystems mit unterschiedlichen Montageabständen (z) in unterschiedlichen Längen zu ermöglichen.

2. Der Bausatz zum Montieren des Sanitärausstattungsprodukts nach Anspruch 1, **gekennzeichnet dadurch, dass** das Montagesystem ein Verriegelungssystem aufweist, welches Vorsprungsabschnitte (9) und zu diesen Vorsprüngen korrespondierende Schlitze (10) an den angebrachten Erweiterungsstücken (2) und dem hinteren Verbindungsstück (3) aufweist.

3. Ein Verfahren des Montierens eines Sanitärausstattungsprodukts an einer Wand unter Verwendung des Montagesystems gemäß Anspruch 1, **gekennzeichnet dadurch, dass** das Montieren realisiert wird durch:
• Kombinieren der Schlüsselstücke (6a, 6b) an dem Innensechskantschlüssel (5),
• Anbringen einer Anzahl von Verbindungsstücken (2) an dem Klemmstück (1)entsprechend der Distanz (z) zwischen den Löchern an der oberen Fläche des Sanitärausstattungsprodukts und der Wand,
• Ausrichten des Klemmstücks (1) und der Verbindungsstücke (2) mit dem Sanitärausstattungsprodukt durch die Innenseite des Lochs an dem an der Wand zu montierenden Sanitärausstattungsprodukts,
• Ausrichten des hinteren Verbindungsstücks (3) mit der Wand von der hinteren Fläche des Montagelochs (13) aus und Drehen desselben um 90° im Uhrzeigersinn mit der Hilfe des Schlüsselstücks (6) an dem Innensechskantschlüssel (5), um es (3) an den Erweiterungsstücken (2) zu befestigen,
• Schaffen der Ausrichtung durch Kontrollieren, ob der Innensechskantschlüssel (5) mit der Innensechskantschraube (7) ausgerichtet ist oder ob nicht, durch das Loch an der oberen Fläche des Sanitärausstattungsprodukts (14),
• Fixieren des Stehbolzens (4) an einem Stift, welcher von der Wand aus vorsteht, auf solch eine Weise, dass die konische Aussparung (12) daran an der Oberseite angeordnet wird,
• Montieren des Sanitärausstattungsprodukts an dem Stehbolzen (4) durch die Montagelöcher (13) an seiner hinteren Fläche, und
• Fixieren des Sanitärausstattungsprodukts an der Wandfläche durch Festziehen der Innensechskantschraube (7) mittels des Innensechskantschlüssels (5) zum Bringen derselben, durch das Loch (11) an dem Sanitärausstattungsprodukt hindurch und durch das Loch des Klemmstücks (1) hindurch sowie in die konische Aussparung (12) an dem Stehbolzen (4) hinein zu verlaufen, welche alle ausgerichtet sind, und dadurch Realisieren des Montagevorgangs.

4. Ein Verfahren gemäß Anspruch 3, **gekennzeichnet dadurch, dass** die Löcher (11) an der oberen Fläche des Sanitärausstattungsprodukts bereitgestellt sind.

5. Ein Verfahren gemäß Anspruch 3, **gekennzeichnet dadurch, dass** die Löcher (11) an der unteren Fläche des Sanitärausstattungsprodukts bereitgestellt sind.

6. Ein Verfahren gemäß Anspruch 3, **gekennzeichnet dadurch, dass** die Löcher an der seitlichen Fläche des Sanitärausstattungsprodukts bereitgestellt sind.

7. Ein Verfahren gemäß Anspruch 3, 4, 5 und 6, das Sanitärausstattungsprodukt aus Keramik gefertigt ist.

8. Ein Verfahren gemäß Anspruch 3, 4, 5 und 6, das Sanitärausstattungsprodukt aus einem polymerbasierenden Material gefertigt ist.

## Revendications

1. Kit comprenant un appareil sanitaire et un système de montage destiné à monter l'appareil sanitaire sur un mur à l'aide de ses trous de montage (11, 13) espacés du mur de soutien et donnant accès au système de montage, ainsi qu'une clé Allen (5) servant d'outil respectif avec une pièce de clé (6) attachée à la clé Allen (5) et qui est utilisée pour fixer une pièce de liaison arrière (3) du système de montage et un goujon dépassant du mur pour monter le système de montage ; le kit comprenant en outre :
• une pièce de serrage (1) qui est pourvue d'une vis Allen (7) qui, quant à elle, entre en interaction avec une cavité conique (12) sur un boulon de goujon (4),
• la pièce de liaison arrière (3),
• le boulon de goujon (4) sur lequel se trouve la cavité conique (12) et qui est fixé au goujon dépassant du mur d'une manière telle que la cavité conique (12) qui se trouve sur lui (4) sera positionnée au niveau de la partie supérieure,
• la vis Allen (7) qui sera fixée dans et s'étend à travers un trou situé sur la pièce de serrage (1) ainsi que dans la cavité conique (12) sur le boulon de goujon (4) qui est aligné et qui sera actionné à travers le trou (11) de l'appareil sanitaire,
• une rondelle (8) qui est montée entre la pièce de serrage (1) et la pièce de liaison arrière (3)
**caractérisé en ce que** le système de montage comprend en outre :
• une pluralité de pièces d'extension (2) qui sont montées entre la pièce de serrage (1) et la pièce de liaison arrière (3) de telle sorte que la pièce de liaison arrière (3) est montée sur les pièces d'extension (2) en la tournant à l'aide de la pièce de clé sur la clé Allen (5) de 90° dans le sens des aiguilles d'une montre et **en ce que** les pièces d'extension (2) sont en nombre suffisant en fonction de la distance (z) entre le trou (11) situé sur la surface de l'appareil sanitaire donnant accès au système de montage et un point de montage situé sur le mur de telle sorte qu'un nombre souhaité de pièces d'extension (2) sont positionnées entre la pièce de serrage (1) et la pièce de liaison arrière (3) afin de permettre l'usage du système de montage avec différentes distances de montage (z) dans différentes longueurs.

2. Kit destiné à monter l'appareil sanitaire selon l'invention, **caractérisé en ce que** le système de montage comprend un système de verrouillage qui comprend des sections saillies (9) et des fentes correspondantes (10) à ces saillies sur les pièces d'extension (2) attachées et la pièce de liaison arrière (3).

3. Procédé de montage d'un appareil sanitaire sur un mur à l'aide du système de montage selon la revendication 1, **caractérisé en ce que** le montage est réalisé en :
• combinant les pièces de clé (6a, 6b) sur la clé Allen (5) ;
• attachant un certain nombre de pièces d'extension (2) à la pièce de serrage (1) en fonction de la distance (z) entre les trous situés sur la surface supérieure de l'appareil sanitaire et le mur ;
• alignant la pièce de serrage (1) et les pièces d'extension (2) à l'appareil sanitaire, par le biais du côté intérieur du trou sur l'appareil sanitaire à monter sur le mur ;
• alignant la pièce de liaison arrière (3) sur le mur depuis la surface arrière du trou de montage (13) et en la tournant de 90° dans le sens des aiguilles d'une montre à l'aide de la pièce de clé (6) sur la clé Allen (5) afin de la (3) fixer aux pièces d'extension (2),
• assurant l'alignement en contrôlant si la clé Allen (5) s'aligne sur la vis Allen (7) ou non, à travers le trou situé sur la surface supérieure de l'appareil sanitaire (14) ;
• fixant le boulon de goujon (4) à un goujon dépassant du mur d'une manière telle que la cavité conique (12) située sur lui sera positionnée au niveau de la partie supérieure ;
• montant l'appareil sanitaire sur le boulon de goujon (4) à travers les trous de montage (13) sur sa surface arrière ; et
• fixant l'appareil sanitaire à la surface murale en serrant la vis Allen (7) au moyen de la clé Allen (5) pour qu'elle s'étende à travers le trou (11) situé sur l'appareil sanitaire et à travers le trou situé sur la pièce de serrage (1) ainsi que dans la cavité conique (12) située sur le boulon de goujon (4), tous étant alignés et réalisant ainsi le processus de montage.

4. Procédé selon la revendication 3, **caractérisé en ce que** les trous (11) se situent sur la surface supérieure de l'appareil sanitaire.

5. Procédé selon la revendication 3, **caractérisé en ce que** les trous (11) se situent sur la surface inférieure de l'appareil sanitaire.

6. Procédé selon la revendication 3, **caractérisé en ce que** les trous se situent sur la surface latérale de l'appareil sanitaire.

7. Procédé selon la revendication 3, 4, 5 et 6 dans lequel l'appareil sanitaire se compose de céramique.

8. Procédé selon la revendication 3, 4, 5 et 6 dans lequel l'appareil sanitaire se compose d'un matériau à base de polymère.
